# EUROPEAN PATENT APPLICATION

(11) **EP 3 098 683 A1**
(43) Date of publication of application: **30.11.2016**
(21) Application number: 16167070.8
(22) Date of filing: 26.04.2016
(51) Int. Cl.: G05D 1/10, G05D 1/00

(54) **METHOD AND SYSTEM FOR DYNAMIC POINT OF INTEREST SHOOTING WITH UAV**

(30) Priority: 28.05.2015 HK 15105078
(71) Applicant: Solomon Mobile Technology Limited, Shatin, N.T.,Hong Kong (HK)
(72) Inventor: Chien, Yu Yang, Hong Kong (HK)
(74) Representative: Izquierdo Blanco, Maria Alicia

(57) **Abstract**

The present application discloses a method for dynamic point of interest shooting with UAV, comprising the steps: acquiring first reference information of a dynamic point of interest; acquiring second reference information of a shooting device; comparing the first reference information with the second reference information, determining if the comparison result meets a preset value; if the comparison result does not meet the preset value: generating a first control instruction based on the comparison result to adjust the second reference information; when the comparison result meets the preset value, generating a second control instruction to control the shooting device to shoot video/photos of the dynamic point of interest in accordance with preset conditions. The present application can achieve an automatic well shooting of the dynamic point of interest. The present application further discloses a system for dynamic point of interest shooting with UAV.

## Description

### TECHNICAL FIELD

The present application relates to the technical field of dynamic point of interest automatic shooting, and more particularly relates to a method and a system for dynamic point of interest shooting with UAV (unmanned aerial vehicle).

### BACKGROUND

At present, with the prevalence of electronic equipments and the increase of shutterbugs, a plurality of UAV aerial photographers/videographers install/pre-install a camera with a pan-tilt-zoom stabilization system (as known as gimbal) to an UAV during flight, in order to shoot videos/photos of themselves from different angles. An existing shooting method is to control the pitching, the rolling, the yawing and the throttles of the UAV as well as camera pan-tilt-zoom manually, in such a way that the camera mounted on the UAV can shoot themselves from various angels. However, in the existing shooting method, when the hands of the photographers/videographers are busy or are moving, it is very difficult to accomplish the auto-shooting of lots of activities, such as riding a bicycle, roller skating, canoeing, or the like.

### BRIEF SUMMARY

The object of the present application is to provide a method and a system for dynamic point of interest shooting with UAV, in order to achieve an automatic self-shooting of the actions of the shutterbug.

To solve the technical problems above, in accordance with a first aspect of the present application, a method for dynamic point of interest shooting with UAV is provided, which comprises the steps:
acquiring first reference information of a dynamic point of interest;
acquiring second reference information of a shooting device;
comparing the first reference information with the second reference information, determining if the comparison result meets a preset value; if the comparison result does not meet the preset value:
   then generating a first control instruction based on the comparison result to adjust the second reference information;
   when the comparison result meets the preset value, generating a second control instruction to control the shooting device to shoot video/photos of the dynamic point of interest in accordance with preset conditions.

Preferably, the step for acquiring first reference information of a dynamic point of interest set by an application in a mobile terminal further includes:
acquiring location information of the dynamic point of interest monitored by a first global positioning system;
acquiring angle information of the dynamic point of interest monitored by a first gyroscope;
acquiring motion rate information of the dynamic point of interest monitored by a first accelerometer; and
acquiring orientation information of the dynamic point of interest monitored by a first compass.

Preferably, the step for acquiring second reference information of a shooting device further includes:
acquiring the second reference information of the shooting device by means of wireless transmission.

Preferably, the step for acquiring the second reference information of the shooting device by means of wireless transmission further includes:
acquiring location information of the shooting device monitored by a second global positioning system by means of wireless transmission;
acquiring angle information of the shooting device monitored by a second gyroscope by means of wireless transmission;
acquiring motion rate information of the shooting device monitored by a second accelerometer by means of wireless transmission; and
acquiring orientation information of the shooting device monitored by a second compass by means of wireless transmission.

Preferably, the step for generating a first control instruction based on the comparison result to adjust the second reference information further includes:
Sending the first control instruction generated to the shooting device by means of wireless communication; and
adjusting the second reference information by the shooting device based on the first control instruction received.

Preferably, the step for generating a second control instruction to control the shooting device to shoot video/photos of the dynamic point of interest in accordance with preset conditions when the comparison result meets the preset value further includes:
sending the second control instruction generated to the shooting device by means of wireless communication; and
controlling the shooting device to shoot video/photos of the dynamic point of interest in accordance with preset conditions.

Preferably, the step for controlling the shooting device to shoot video/photos of the dynamic point of interest in accordance with preset conditions further includes:
controlling the shooting device to shoot video/photos of the dynamic point of interest in accordance with a specific orientation angle, distance and height, and a tilted angle.

Preferably, the wireless communication includes wireless network or Bluetooth.

A system for dynamic point of interest shooting with UAV is further provided, which comprises an information acquiring unit, a comparison unit, a control unit and an information sending unit; wherein
the information acquiring unit acquires first reference information of a dynamic point of interest and second reference information of a shooting device, and further sends the first reference information and the second reference information to the comparison unit connected thereto;
the comparison unit compares the first reference information with the second reference information, and further sends the comparison result to the control unit connected thereto;
the control unit determines if the comparison result meets the preset value; if not, the control unit generates a first control instruction, and sends the first control instruction to the information sending unit;
the information sending unit in turn sends the first control instruction to the shooting device to adjust the second reference information;
when the comparison result meets the preset value, the control unit generates a second control instruction, and sends the second control instruction to the information sending unit;
the information sending unit in turn sends the second control instruction to the shooting device, and the shooting device shoots video/photos of the dynamic point of interest in accordance with the preset conditions based on the second control instruction received.

Preferably, the system further comprises a first global positioning system, a second global positioning system, a first gyroscope, a second gyroscope, a first accelerometer, a second accelerometer, a first compass, and a second compass; wherein
the first global positioning system is used to monitor location information of the dynamic point of interest, and send the location information of the dynamic point of interest to the information acquiring unit connected thereto;
the first gyroscope is used to monitor angle information of the dynamic point of interest, and send the angle information of the dynamic point of interest to the information acquiring unit connected thereto;
the first accelerometer is used to monitor motion rate information of the dynamic point of interest, and further send the motion rate information of the dynamic point of interest to the information acquiring unit connected thereto;
the first compass is used to monitor orientation information of the dynamic point of interest, and further send the orientation information of the dynamic point of interest to the information acquiring unit connected thereto;
the second global positioning system is used to monitor location information of the shooting device, and send the location information of the shooting device to the information acquiring unit connected thereto;
the second gyroscope is used to monitor angle information of the shooting device, and send the angle information of the shooting device to the information acquiring unit connected thereto;
the second accelerometer is used to monitor motion rate information of the shooting device, and further send the motion rate information of the shooting device to the information acquiring unit connected thereto; and
the second compass is used to monitor orientation information of the shooting device, and further send the orientation information of the shooting device to the information acquiring unit connected thereto.

Preferably, the system further comprises a wireless communication unit connected to the information acquiring unit and the information sending unit.

Preferably, the information acquiring unit, the comparison unit, the control unit, the information sending unit, the first global positioning system, the first gyroscope, the first accelerometer, and the first compass are integrated on a mobile device;
the second global positioning system, the second gyroscope, the second accelerometer, and the second compass are integrated on the shooting device.

From the above technical solutions, it can be seen that, in the method for dynamic point of interest shooting with UAV, by automatically acquiring the reference information of the dynamic point of interest, and the reference information of shooting device, and comparing these two kinds of information, determining if the comparison result meets the preset value. When the comparison result does not meet the preset value, a first control instruction is generated repetitively to adjust the reference information of the shooting device, in this way, the dynamic point of interest can keep moving and be automatically and well shot at the center of video/photos.

### BRIEF DESCRIPTION OF THE DRAWINGS

In order to more clearly describe the technical solution in the present embodiments or in the prior art, the accompany drawings used in the embodiments or the prior art are now briefly described. Obviously, the accompanying drawings described in the follow are only some certain embodiments of the present application, and one skilled in the art may obtain other accompanying drawings according to these drawings without paining any inventive work.
Fig. 1 shows a method for dynamic point of interest shooting with UAV according to an embodiment of the present application;
Fig. 2 is a schematic view of a system for dynamic point of interest shooting with UAV according to an embodiment of the present application;

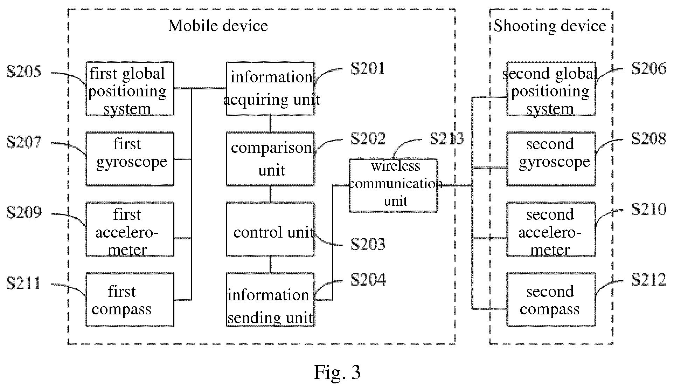

Fig. 3 is a schematic view of a system for dynamic point of interest shooting with UAV according to a further embodiment of the present application;
Fig. 4 is a view showing the shooting of the dynamic point of interest with UAV according to the present application; and
Fig. 5 is a further view showing the shooting of the dynamic point of interest with UAV according to the present application.

### DETAILED DESCRIPTION OF THE PREFERRED EMBODIMENT

To clearly and completely explain the technical solutions in the present application, the present application will be further described with reference to the accompanying drawings in the embodiments in the following. Obviously, the embodiments described here are only parts of the embodiments of the present application, not all the embodiments of the present application. According to the embodiments of the present application, one skilled in the art can obtain other embodiments without paining any inventive work. All these belong to the protection scope of the present application.

The embodiment of the present application discloses a method and a system for dynamic point of interest shooting with UAV, in order to achieve an automatic self-shooting of actions of a shutterbug during the movement of the shutterbug.

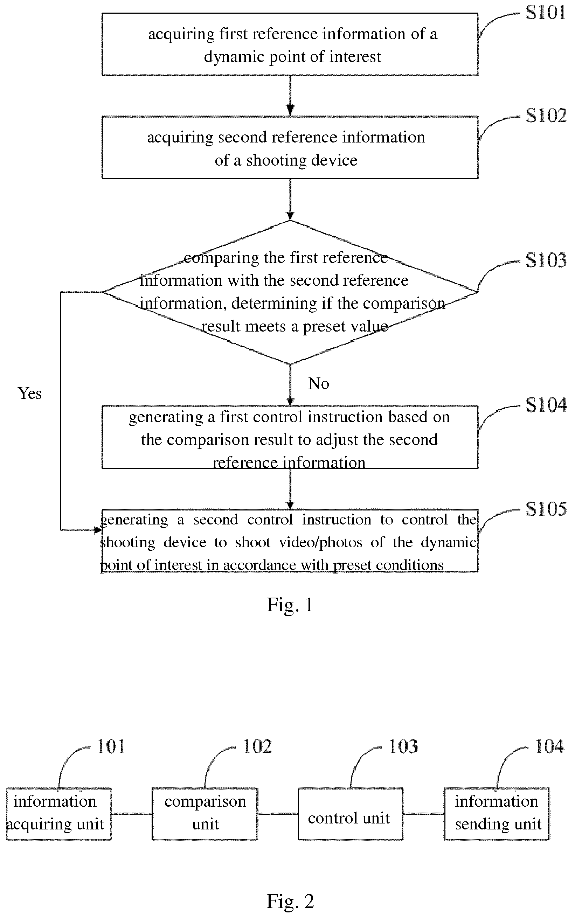

As shown in Fig. 1, the method for dynamic point of interest shooting with UAV comprises the following steps:
In a step S101, first reference information of a dynamic point of interest is acquired.
In a step S102, second reference information of a shooting device is acquired.
In a step S103, the first reference information is compared with the second reference information, and the comparison result is determined if it meets a preset value; if not, then a step S104 is executed; or else, a step S05 is executed.
In the step S104, a first control instruction is generated based on the comparison result to adjust the second reference information.
In the step S105, when the comparison result meets the preset value, a second control instruction is generated to control the shooting device to shoot video/photos of the dynamic point of interest in accordance with preset conditions.

In specific, the working processes of the method for dynamic point of interest shooting with UAV are as follow: firstly, the first reference information of the dynamic point of interest and the second reference information of the shooting device are respectively acquired; then the first reference information acquired is compared with the second reference information, and the comparison result is determined if it meets the preset value set by the shutterbug; if the comparison result meets the preset value, then a shooting is automatically carried out by the shooting device; if the comparison result does not meet the preset value, then a first control instruction is generated based on the comparison result, in order to adjust the second reference information of the shooting device, until the comparison result between the first reference information and the second reference information meet the preset value, then a second control instruction is generated to control the shooting device to automatically shoot video/photos of the dynamic point of interest in accordance with preset conditions. In the method described above, a well automatic shooting of the dynamic point of interest is achieved by automatically obtain the reference information, comparing the reference information, and adjusting the reference information.

In the embodiment described above, the step S101 (the first reference information of the dynamic point of interest is acquired) specifically includes the following steps:
location information of the dynamic point of interest monitored by a first global positioning system is acquired;
angle information of the dynamic point of interest monitored by a first gyroscope is acquired;
motion rate information of the dynamic point of interest monitored by a first accelerometer is acquired; and
orientation information of the dynamic point of interest monitored by a first compass is acquired.

The step S102 (the second reference information of the shooting device is acquired) specifically includes the following steps:
location information of the shooting device monitored by a second global positioning system is acquired by means of wireless transmission;
angle information of the shooting device monitored by a second gyroscope is acquired by means of wireless transmission;
motion rate information of the shooting device monitored by a second accelerometer is acquired by means of wireless transmission; and
orientation information of the shooting device monitored by a second compass is acquired by means of wireless transmission.

In specific, the wireless transmission methods described above include wireless network or Bluetooth.

In specific, the step S104 (a first control instruction is generated based on the comparison result to adjust the second reference information) specifically includes the following steps:
the first control instruction generated is sent to the shooting device by means of wireless communication; and
the second reference information is adjusted by the shooting device based on the first control instruction received.

In specific, the step S105 (when the comparison result meets the preset value, a second control instruction is generated to control the shooting device to shoot video/photos of the dynamic point of interest in accordance with preset conditions) specifically includes the following steps:
the second control instruction generated is sent to the shooting device by means of wireless communication; and
the shooting device is controlled to shoot video/photos of the dynamic point of interest in accordance with a specific orientation angle, a distance and a height, and a tilted angle, based on the second control instruction received.

In specific, the wireless transmission methods described above include wireless network or Bluetooth.

The embodiment of the present application further discloses a system for dynamic point of interest shooting with UAV, which includes: an information acquiring unit 101, a comparison unit 102, a control unit 103 and an information sending unit 104. In this case:

The information acquiring unit 101 acquires the first reference information of the dynamic point of interest and the second reference information of the shooting device, and further sends the first reference information and the second reference information to the comparison unit 102 connected thereto.

The comparison unit 102 compares the first reference information with the second reference information, and further sends the comparison result to the control unit 103 connected thereto.

The control unit 103 determines if the comparison result meets the preset value; if not, the control unit 103 generates a first control instruction, and sends the first control instruction to the information sending unit 104. And the information sending unit 104 sends the first control instruction to the shooting device to adjust the second reference information.

When the comparison result meets the preset value, the control unit 103 generates a second control instruction, and sends the second control instruction to the information sending unit 104; the information sending unit 104 then sends the second control instruction to the shooting device, and the shooting device shoots video/photos of the dynamic point of interest in accordance with the preset conditions, based on the second control instruction received.

In specific, the working processes of the system for dynamic point of interest shooting with UAV are as follow: when the shutterbug needs to shoot video/photos of the moving process via the shooting device mounted on the UAV, firstly, the information acquiring unit 101 acquires a dynamic point of interest, i.e., the first reference information of the shutterbug, and acquires the second reference information of the shooting device as well; then the information acquiring unit 101 sends the first reference information of the dynamic point of interest and the second reference information of the shooting device to the comparison unit 102. The comparison unit 102 compares the first reference information with the second reference information, and further sends the comparison result to the control unit 103. The control unit 103 determines if the comparison result meets the preset value set by the shutterbug. If the comparison result does not meet the preset value, the control unit 103 generates a first control instruction, and sends the first control instruction to the information sending unit 104; the information sending unit 104 further sends the first control instruction to the shooting device to adjust the second reference information, in order to make the comparison result between the first reference information and the second reference information meet the preset value. When the comparison result meets the preset value, the control unit 103 generates a second control instruction to control the shooting device to shoot video/photos of the dynamic point of interest in accordance with the preset conditions.

On the basis of the embodiments above, a further embodiment of the present application further discloses a system for dynamic point of interest shooting with UAV, which includes: an information acquiring unit 201, a comparison unit 202, a control unit 203, an information sending unit 204, a first global positioning system 205, a second global positioning system 206, a first gyroscope 207, a second gyroscope 208, a first accelerometer 209, a second accelerometer 210, a first compass 211, a second compass 212, and a wireless communication unit 213. In this case:

The first global positioning system 205 is used to monitor location information of the dynamic point of interest, and send the location information of the dynamic point of interest to the information acquiring unit 201 connected thereto.

The first gyroscope 207 is used to monitor angle information of the dynamic point of interest, and send the angle information of the dynamic point of interest to the information acquiring unit 201 connected thereto.

The first accelerometer 209 is used to monitor motion rate information of the dynamic point of interest, and further send the motion rate information of the dynamic point of interest to the information acquiring unit 201 connected thereto.

The first compass 211 is used to monitor orientation information of the dynamic point of interest, and further send the orientation information of the dynamic point of interest to the information acquiring unit 201 connected thereto.

The second global positioning system 206 is used to monitor location information of the shooting device, and send the location information of the shooting device to the information acquiring unit 201 connected thereto via the wireless communication unit 213.

The second gyroscope 208 is used to monitor angle information of the shooting device, and send the angle information of the shooting device to the information acquiring unit 201 connected thereto via the wireless communication unit 213.

The second accelerometer 210 is used to monitor motion rate information of the shooting device, and further send the motion rate information of the shooting device to the information acquiring unit 201 connected thereto via the wireless communication unit 213.

The second compass 212 is used to monitor orientation information of the shooting device, and further send the orientation information of the shooting device to the information acquiring unit 201 connected thereto via the wireless communication unit 213.

The information acquiring unit 201 acquires the location information, the angle information, the motion rate information and the orientation information of the dynamic point of interest, and the location information, the angle information, the motion rate information and the orientation information of the shooting device, and further sends the information to the comparison unit 202 connected thereto.

The comparison unit 202 compares the information acquired, and further sends the comparison result to the control unit 203 connected thereto.

The control unit 203 determines if the comparison result meets the preset value; if not, the control unit 203 generates a first control instruction, and sends the first control instruction to the information sending unit 204. And the information sending unit 204 sends the first control instruction to the shooting device to adjust the location information, the angle information, the motion rate information and the orientation information of the shooting device.

When the comparison result meets the preset value, the control unit 203 generates a second control instruction, and sends the second control instruction to the information sending unit 204; the information sending unit 204 then sends the second control instruction to the shooting device via the wireless communication unit 213, and the shooting device shoots video/photos of the dynamic point of interest in accordance with the preset conditions based on the second control instruction received.

In specific, the working processes of the system for dynamic point of interest shooting with UAV are as follow: when the shutterbug needs to shoot video/photos of the moving process via the shooting device mounted on the UAV, firstly, the information acquiring unit 201 acquires the location information of the dynamic point of interest monitored by the first global positioning system 205, acquires the angle information of the dynamic point of interest monitored by the first gyroscope 207, acquires the motion rate information of the dynamic point of interest monitored by the first accelerometer 209, acquires the orientation information of the dynamic point of interest monitored by the first compass 211, acquires the location information of the shooting device monitored by the second global positioning system 206 via the wireless communication unit 213, acquires the angle information of the shooting device monitored by the second gyroscope 208 via the wireless communication unit 213, acquires the motion rate information of the shooting device monitored by the second accelerometer 210 via the wireless communication unit 213, and acquires the orientation information of the shooting device monitored by the second compass 212 via the wireless communication unit 213. Secondly, the information acquiring unit 201 sends the location information, the angle information, the motion rate information and the orientation information of the dynamic point of interest, and the location information, the angle information, the motion rate information and the orientation information of the shooting device to the comparison unit 202 connected thereto. The comparison unit 202 compares the information acquired, and further sends the comparison result to the control unit 203 connected thereto. The control unit 203 determines if the comparison result meets the preset value; if not, the control unit 203 generates a first control instruction, and sends the first control instruction to the information sending unit 204. The information sending unit 204 in turn sends the first control instruction to the shooting device via the wireless communication unit 213 to adjust the location information, the angle information, the motion rate information and the orientation information of the shooting device. Finally, when the comparison result meets the preset value, a second control instruction is generated, in order to control the shooting device to shoot video/photos of the dynamic point of interest in accordance with a specific orientation angle, a distance and a height, and a tilted angle, based on the second control instruction received.

In specific, the wireless transmission methods described above include wireless network or Bluetooth.

In the above embodiment, the information acquiring unit 201, the comparison unit 202, the control unit 203, the information sending unit 204, the first global positioning system 205, the first gyroscope 207, the first accelerometer 209, the first compass 211, and the wireless communication unit 213 are integrated on a mobile device; while the second global positioning system 206, the second gyroscope 208, the second accelerometer 210, and the second compass 212 are integrated on the shooting device.

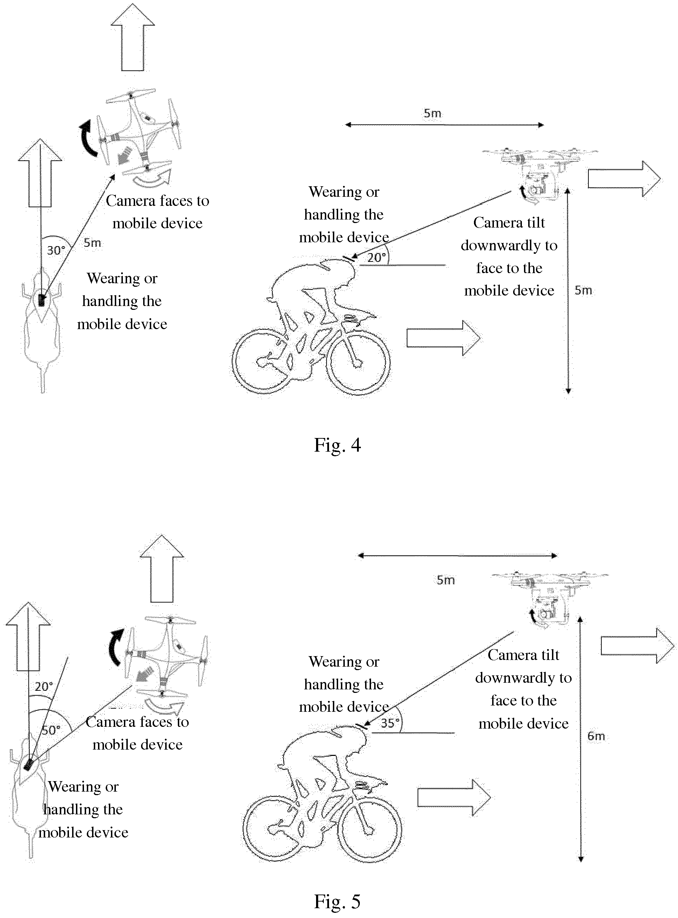

Figs. 4-5 show an example of the shooting process of the dynamic point of interest with UAV disclosed in the embodiment of the present application. As shown in Fig. 4, a rider wants to use the UAV camera for self-shooting during the riding. In this case, he needs to mount the mobile phone onto a helmet, and arrange the UAV in a position on the right-hand side of the mobile phone at an angle of 30 degrees (that is, horizontal shift in one o'clock direction at an angle of 30 degrees), a distance of 5m and a height of 5m, in order to make the UAV camera face to him.

When the rider forwardly rides straightly with his head and mobile device forwardly moving straightly, the camera of the UAV faces to the rider and flies in a same direction and a same speed with the rider.

As shown in Fig. 5, when the rider straightly rides with the head turning to the right-hand side at an angle of 20 degrees, and further being tilted upwardly to 35 degrees, the UAV deg deviates to the right-hand side at an angle of 50 degrees (keeping a horizontal shift at an angle of 30 degrees), and the camera keeps facing to the rider and flying in a same direction and a same speed with the rider.

In conclusion, in the present application, a fixed dynamic point of interest is preset on an APP installed in the mobile terminal, and the UAV carries the shooting device to shoot video/photos of the preset dynamic point of interest. The global positioning system, the gyroscope, the accelerometer, the compass or the like to collect information, and the information is further sent to the mobile terminal by means of wireless transmission. When the dynamic point of interest moves or adjusts the direction, the mobile terminal analyzes the information received, and generates control instructions, in order to adjust the UAV, and thus the UAV can track and shoot video/photos of the dynamic point of interest in accordance with the preset conditions.

The embodiments of the present application are described in a progressive method. In each embodiment, only the differences from other embodiments are focused on, and other similar parts of different embodiments can refer to each other.

One skilled in the art can achieve or use the present application based on the description of the embodiments disclosed above. It is obvious for one skilled in the art to make various modifications to these embodiments, and the general principle defined in the present application can be achieved in other embodiments, without going beyond the spirit or the scope of the present application. Therefore, the present application will not be limited to the embodiments shown in the present application. Instead, the present application focuses on the widest protection scope in accordance with the principle and novel features disclosed in the present application.

## Claims

1. A method for dynamic point of interest shooting with UAV, comprising the steps:
acquiring first reference information of a dynamic point of interest set by an application in a mobile terminal;
acquiring second reference information of a shooting device;
comparing the first reference information with the second reference information, determining if the comparison result meets a preset value; if the comparison result does not meet the preset value:
then generating a first control instruction based on the comparison result to adjust the second reference information;
when the comparison result meets the preset value, generating a second control instruction to control the shooting device to shoot video/photos of the dynamic point of interest in accordance with preset conditions.

2. The method according to claim 1, **characterized in that**, the step for acquiring first reference information of a dynamic point of interest set by an application in a mobile terminal further includes:
acquiring location information of the dynamic point of interest monitored by a first global positioning system;
acquiring angle information of the dynamic point of interest monitored by a first gyroscope;
acquiring motion rate information of the dynamic point of interest monitored by a first accelerometer; and
acquiring orientation information of the dynamic point of interest monitored by a first compass.

3. The method according to claim 2, **characterized in that**, the step for acquiring second reference information of a shooting device further includes:
acquiring the second reference information of the shooting device by means of wireless transmission.

4. The method according to claim 3, **characterized in that**, the step for acquiring the second reference information of the shooting device by means of wireless transmission further includes:
acquiring location information of the shooting device monitored by a second global positioning system by means of wireless transmission;
acquiring angle information of the shooting device monitored by a second gyroscope by means of wireless transmission;
acquiring motion rate information of the shooting device monitored by a second accelerometer by means of wireless transmission; and
acquiring orientation information of the shooting device monitored by a second compass by means of wireless transmission.

5. The method according to claim 4, **characterized in that**, the step for generating a first control instruction based on the comparison result to adjust the second reference information further includes:
Sending the first control instruction generated to the shooting device by means of wireless communication; and
adjusting the second reference information by the shooting device based on the first control instruction received.

6. The method according to claim 5, **characterized in that**, the step for generating a second control instruction to control the shooting device to shoot video/photos of the dynamic point of interest in accordance with preset conditions when the comparison result meets the preset value further includes:
sending the second control instruction generated to the shooting device by means of wireless communication; and
controlling the shooting device to shoot video/photos of the dynamic point of interest in accordance with preset conditions.

7. The method according to claim 6, **characterized in that**, the step for controlling the shooting device to shoot video/photos of the dynamic point of interest in accordance with preset conditions further includes:
controlling the shooting device to shoot video/photos of the dynamic point of interest in accordance with a specific orientation angle, distance and height, and a tilted angle.

8. The method according to claim 7, **characterized in that**, the wireless communication includes wireless network or Bluetooth.

9. A system for dynamic point of interest shooting with UAV, comprising an information acquiring unit, a comparison unit, a control unit and an information sending unit; wherein
the information acquiring unit acquires first reference information of a dynamic point of interest and second reference information of a shooting device, and further sends the first reference information and the second reference information to the comparison unit connected thereto;
the comparison unit compares the first reference information with the second reference information, and further sends the comparison result to the control unit connected thereto;
the control unit determines if the comparison result meets the preset value; if not, the control unit generates a first control instruction, and sends the first control instruction to the information sending unit;
the information sending unit in turn sends the first control instruction to the shooting device to adjust the second reference information;
when the comparison result meets the preset value, the control unit generates a second control instruction, and sends the second control instruction to the information sending unit;
the information sending unit in turn sends the second control instruction to the shooting device, and the shooting device shoots video/photos of the dynamic point of interest in accordance with the preset conditions based on the second control instruction received.

10. The system according to claim 9, **characterized in that**, the system further comprises a first global positioning system, a second global positioning system, a first gyroscope, a second gyroscope, a first accelerometer, a second accelerometer, a first compass, and a second compass; wherein
the first global positioning system is used to monitor location information of the dynamic point of interest, and send the location information of the dynamic point of interest to the information acquiring unit connected thereto;
the first gyroscope is used to monitor angle information of the dynamic point of interest, and send the angle information of the dynamic point of interest to the information acquiring unit connected thereto;
the first accelerometer is used to monitor motion rate information of the dynamic point of interest, and further send the motion rate information of the dynamic point of interest to the information acquiring unit connected thereto;
the first compass is used to monitor orientation information of the dynamic point of interest, and further send the orientation information of the dynamic point of interest to the information acquiring unit connected thereto;
the second global positioning system is used to monitor location information of the shooting device, and send the location information of the shooting device to the information acquiring unit connected thereto;
the second gyroscope is used to monitor angle information of the shooting device, and send the angle information of the shooting device to the information acquiring unit connected thereto;
the second accelerometer is used to monitor motion rate information of the shooting device, and further send the motion rate information of the shooting device to the information acquiring unit connected thereto; and
the second compass is used to monitor orientation information of the shooting device, and further send the orientation information of the shooting device to the information acquiring unit connected thereto.

11. The system according to claim 10, **characterized in that**, the system further comprises a wireless communication unit connected to the information acquiring unit and the information sending unit.

12. The system according to claim 11, **characterized in that**, the information acquiring unit, the comparison unit, the control unit, the information sending unit, the first global positioning system, the first gyroscope, the first accelerometer, and the first compass are integrated on a mobile device;
the second global positioning system, the second gyroscope, the second accelerometer, and the second compass are integrated on the shooting device.
